# EUROPEAN PATENT APPLICATION

(11) **EP 4 648 197 A1**
(43) Date of publication of application: **12.11.2025**
(21) Application number: 24815673.9
(22) Date of filing: 21.03.2024
(51) Int. Cl.: H01M 50/256, H01M 50/107, B65D 25/10

(54) **BATTERY CELL TRAY AND BATTERY CELL TRAY ASSEMBLY**

(30) Priority: 02.06.2023 KR 20230071477
(71) Applicant: LG Energy Solution, Ltd., Seoul 07335 (KR)
(72) Inventor: KIM, Min Jung, Daejeon 34122 (KR)
(74) Representative: Plasseraud IP
(86) International application number: PCT/KR2024/003565
(87) International publication number: WO 2024/248294

(57) **Abstract**

The present disclosure relates to a battery cell tray and a battery cell tray assembly, and the battery cell tray includes a lower plate where an accommodation portion accommodating one end of the battery cell is formed and an upper plate formed to be penetrated by the battery cell, wherein the lower plate and the upper plate may be coupled to each other in a sliding movable way between a first state where an opening of the accommodation portion is opened and a second state where an opening of the accommodation portion is at least partially closed.

The battery cell tray and the battery cell tray assembly according to the present disclosure may accommodate, fix and move curved battery cells, and reduce the risk of damage to curved battery cells and fire during charging and discharging.

## Description

### TECHNICAL FIELD

### CROSS-REFERENCE TO RELATED APPLICATIONS

The present application claims priority to Korean Patent Application No. 10-2023-0071477 filed on June 2, 2023 in the Republic of Korea, the disclosure of which is incorporated herein by reference.

### TECHNICAL FIELD

The present disclosure relates to a battery cell tray and a battery cell tray assembly, and specifically, to a battery cell tray and a battery cell tray assembly that may accommodate, fix and move curved battery cells, and reduce the risk of damage to curved battery cells and fire during charging and discharging.

### BACKGROUND ART

Recently, the depletion of fossil fuels forces to increase the price of energy sources and has strong impact on the growing attention towards environmental pollution, and the need for eco-friendly alternative energy sources is an essential factor for future life. In this context, a variety of energy generation technologies including solar energy, wind energy, tidal energy and the like are being studied, and attention is directed to energy storage systems such as batteries to make use of the produced electrical energy more efficiently.

Furthermore, with the technological development of, and increasing demand for, electronic mobile devices and electric vehicles using batteries, the demand for batteries as an energy source is rapidly increasing, and accordingly, many studies are being conducted on batteries that meet a variety of needs.

Batteries are gaining attention as an energy source in a wide range of products including mobile devices and electric vehicles. In particular, secondary batteries are regarded as a promising energy resource that can replace the existing products using fossil fuels, and do not produce by-products from the use of energy, so they are attracting attention as an eco-friendly energy source.

On the other hand, secondary batteries are also attracting attention as an energy source for electric vehicles (EVs), hybrid electric vehicles (HEVs) and Plug-In HEV that are hailed as a solution for reducing air pollution from the existing vehicles using fossil fuels such as gasoline vehicles and diesel vehicles.

As the models and types to which secondary batteries are applied are diversified, it is necessary to implement the shape of the secondary batteries in various ways according to the shape of the device where they are applied and to utilize internal space efficiently.

In the prior art, a tray capable of accommodating curved battery cells has not been manufactured, so a tray with a wide width should be used when accommodating curved battery cells in an existing battery cell tray. At this time, due to the separation space between the battery cells and the tray, the battery cells could move and damage the exterior, and there was a risk of fire when charging or discharging the battery cells in their moving state.

### SUMMARY

### TECHNICAL PROBLEM

To solve the above-described problem, the present disclosure is directed to providing a battery cell tray and a battery cell tray assembly that may accommodate, fix and move curved battery cells, and reduce the risk of damage to curved battery cells and fire during charging and discharging.

### TECHNICAL SOLUTION

A battery cell tray according to the present disclosure includes a lower plate where an accommodation portion accommodating one end of the battery cell is formed and an upper plate formed to be penetrated by the battery cell, wherein the lower plate and the upper plate may be coupled to each other in a sliding movable way between a first state where an opening of the accommodation portion is opened and a second state where an opening of the accommodation portion is at least partially closed.

The lower plate may include a first protrusion protruding on an upper surface thereof, and the upper plate may include a first groove provided to be coupled to the first protrusion on a lower surface thereof.

The upper plate may include a second protrusion protruding on a lower surface thereof, and the lower plate may include a second groove provided to be coupled to the second protrusion on an upper surface thereof.

The battery cell tray according to the present disclosure may further include an additional plate coupled to the upper surface of the upper plate and provided to fix the battery cell.

In the battery cell tray according to the present disclosure in the first state, the upper plate moves in a first direction with respect to the lower plate, and the opening of the accommodation portion is opened, so that the battery cell may be inserted into or separated from the accommodation portion.

In the battery cell tray according to the present disclosure in the second state, the upper plate moves in a second direction opposite to the first direction with respect to the lower plate, and the opening of the accommodation portion is at least partially closed, so that the battery cell may be accommodated in and fixed to the accommodation portion.

The battery cell may be formed with a curvature, and the upper plate may include a third surface formed to have the same curvature as the battery cell to support the battery cell in the second state.

The accommodation portion may include a first surface capable of supporting a portion of one surface of the battery cell and a second surface capable of supporting a portion of the other surface of the battery cell.

The battery cell may be formed with a curvature, and the first surface may be formed to have the same curvature as the battery cell.

A battery cell tray assembly according to the present disclosure may include a battery cell tray as stated in claim 1 and a tray frame in which the battery cell tray is accommodated.

### ADVANTAGEOUS EFFECTS

The battery cell tray and the battery cell tray assembly according to the present disclosure have the effect of accommodating, fixing and moving curved battery cells, and reducing the risk of damage to curved battery cells and fire during charging and discharging.

### BRIEF DESCRIPTION OF THE DRAWINGS

FIG. 1 is a perspective view showing a lower tray of a battery cell tray according to Embodiment 1 of the present disclosure.
FIG. 2 is a perspective view showing an upper tray of a battery cell tray according to Embodiment 1 of the present disclosure.
FIG. 3 is a cross-sectional view and an enlarged view showing a cross-section of a battery cell tray according to Embodiment 1 of the present disclosure when it is in a first state.
FIG. 4 is a cross-sectional view and an enlarged view showing a cross-section of a battery cell tray according to Embodiment 1 of the present disclosure when it is in a second state.
FIG. 5 is a perspective view showing a lower tray of a battery cell tray according to Embodiment 2 of the present disclosure.
FIG. 6 is a perspective view showing an upper tray of a battery cell tray according to Embodiment 2 of the present disclosure.
FIG. 7 is a perspective view showing an additional plate of the present disclosure.
FIG. 8 is a perspective view showing a battery cell tray assembly according to the present disclosure.

### DETAILED DESCRIPTION

Hereinafter, preferred embodiments of the present disclosure will be described in sufficient detail with reference to the accompanying drawings to enable those having ordinary skill in the technical field pertaining to the present disclosure to easily carry out the present disclosure. However, the present disclosure may be embodied in many different forms and is not limited or restricted by the following embodiments.

To clearly describe the present disclosure, an irrelevant description or a detailed description of related known technology that may unnecessarily obscure the gist of the present disclosure is omitted, and in affixing the reference numerals to the elements in each drawing, the identical or similar reference numerals are affixed to the identical or similar elements throughout the present disclosure.

It should be understood that the terms or words used in the present disclosure and the appended claims should not be construed as limited to general and dictionary meanings, but rather be interpreted based on the meanings and concepts corresponding to the technical aspect of the present disclosure on the basis of the principle that the inventor is allowed to define terms appropriately for the best explanation.

### Embodiment 1

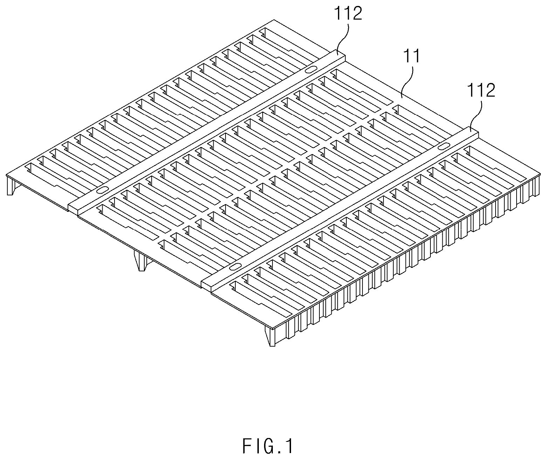

Hereinafter, Embodiment 1 of a battery cell tray 1 according to the present disclosure will be described in detail with reference to FIGS. 1 to 4 and FIG. 7.

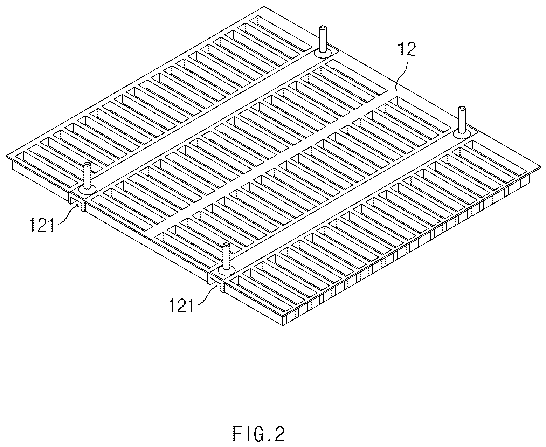

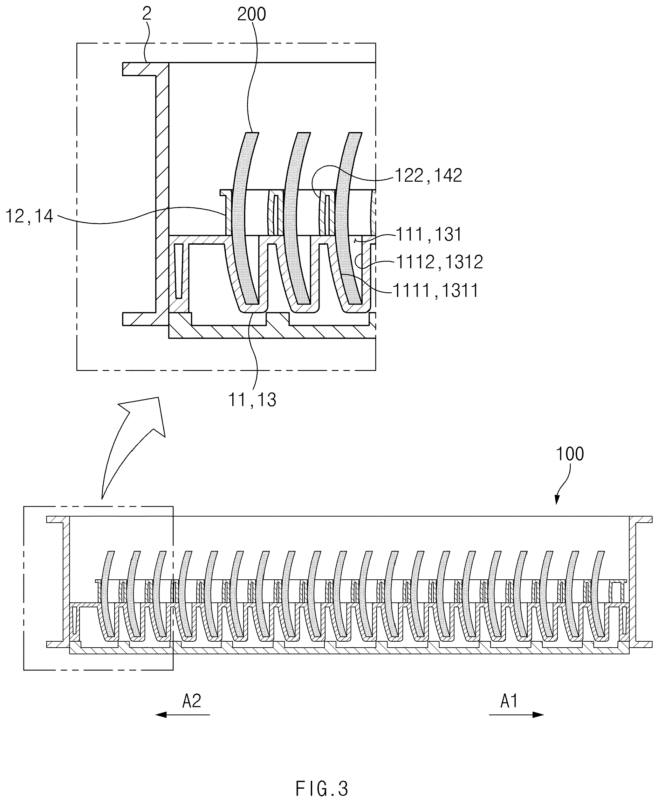

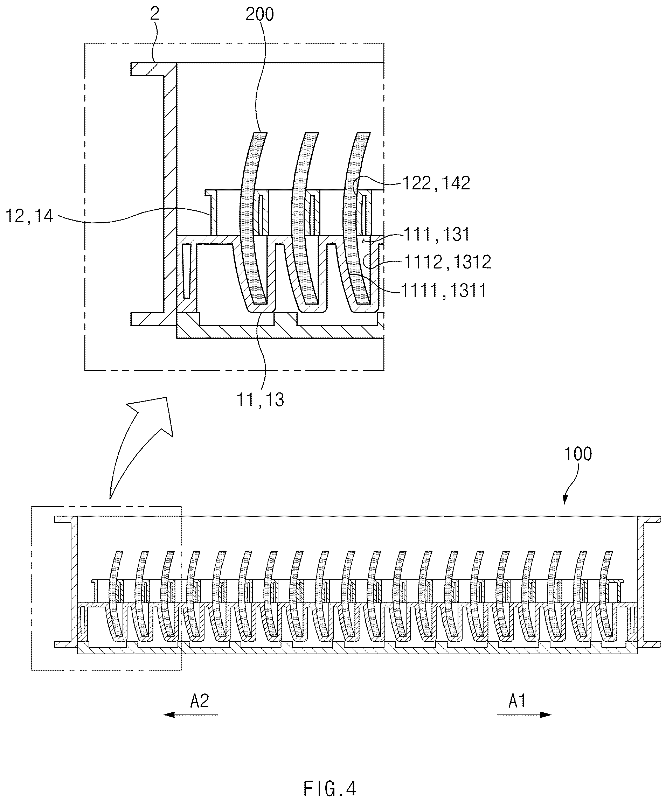

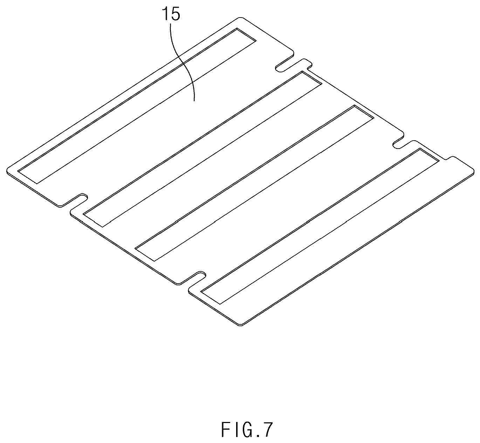

FIG. 1 is a perspective view showing a lower tray of a battery cell tray according to Embodiment 1 of the present disclosure, FIG. 2 is a perspective view showing an upper tray of a battery cell tray according to Embodiment 1 of the present disclosure, FIG. 3 is a cross-sectional view and an enlarged view showing a cross-section of a battery cell tray according to Embodiment 1 of the present disclosure when it is in a first state, FIG. 4 is a cross-sectional view and an enlarged view showing a cross-section of a battery cell tray according to Embodiment 1 of the present disclosure when it is in a second state, and FIG. 7 is a perspective view showing an additional plate of the present disclosure.

Referring to FIGS. 1 to 4, the battery cell tray 1 according to Embodiment 1 of the present disclosure may include a lower plate 11 and an upper plate 12. The battery cell tray 1 may be provided to accommodate and fix or move the battery cells 200.

An accommodation portion 111 in which one end of the battery cell 200 is accommodated may be formed in the lower plate 11. The lower plate 11 may include a first protrusion 112. A plurality of accommodation portions 111 may be formed in the lower plate 11 to accommodate a plurality of battery cells 200.

The first protrusion 112 may be formed on the upper surface of the lower plate 11. The first protrusion 112 may be formed in plurality on the lower plate 11. The first protrusion 112 may be formed between the plurality of accommodation portions 111. The first protrusion 112 may be formed continuously from one end to the other end. The first protrusion 112 is shown to have a rectangular cross-section, but is not limited thereto, and it has a shape corresponding to a first groove 121 to be described later, so may be coupled to the first groove 121.

The upper plate 12 may be formed to be penetrated by the battery cell 200. The upper plate 12 may include the first groove 121. The upper plate 12 may be disposed to partially close an opening of the accommodation portion 111 of the lower plate 11.

The first groove 121 may be coupled to the first protrusion 112. The first groove 121 may be formed on the lower surface of the upper plate 12. The first groove 121 may be provided to be slidably coupled to the first protrusion 112. The first groove 121 may be formed in a number corresponding to the number of first protrusions 112. When the first protrusion 112 is formed from one end to the other end of the lower plate 11, the first groove 121 may be formed continuously from one end to the other end of the lower surface of the upper plate 12 in response. The shape of the first groove 121 is sufficient as long as it may be coupled to the first protrusion 112, and is not limited to the shape shown in the drawing.

The upper plate 12 and the lower plate 11 may be coupled to each other. The upper plate 12 and the lower plate 11 may be coupled to each other in a sliding movable way between the first state and the second state. The lower plate 11 may be slidably coupled to the upper plate 12, wherein the lower plate 11 is fixed and the upper plate 12 is movable.

The first state is a state in which the opening of the accommodation portion 111 of the lower plate 11 is opened. In the first state, the upper plate 12 may move in a first direction A1 with respect to the lower plate 11. The upper plate 12 moves in the first direction A1, and the opening of the accommodation portion 111 is opened, so that the battery cell 200 may be inserted into or separated from the accommodation portion 111.

The second state is a state in which the opening of the accommodation portion 111 of the lower plate 11 is at least partially closed. In the second state, the upper plate 12 may move in a second direction A2 opposite to the first direction A1 with respect to the lower plate 11. The upper plate 12 moves in the second direction A2, and the opening of the accommodation portion 111 is at least partially closed, so that the battery cell 200 may be accommodated in and fixed to the accommodation portion 111.

To move from the first state to the second state, the upper plate 12 should be sliding.

A curvature may be formed in the battery cell 200 accommodated in the battery cell tray 1 according to Embodiment 1 of the present disclosure. When the battery cell 200 is formed with a curvature, the upper plate 12 may include a third surface 122 formed to have the same curvature as the battery cell 200 to support the battery cell 200 in the second state. The third surface 122 is formed to have the same curvature as the battery cell 200, so that the battery cell 200 may be fixed so as not to shake or fall off after being accommodated in the accommodation portion 111.

The accommodation portion 111 may include a first surface 1111 capable of supporting a portion of one surface of the battery cell 200. The accommodation portion 111 may include a second surface 1112 capable of supporting a portion of the other surface of the battery cell 200. The first surface 1111 may be formed to have the same curvature as the battery cell 200. When the first surface 1111 has the same curvature as the battery cell 200, the battery cell 200 may be fixed or moved without damaging the surface of the battery cell 200.

The battery cell tray 1 according to Embodiment 1 of the present disclosure may further include an additional plate 15. The additional plate 15 may be coupled to the upper surface of the upper plate 12. The additional plate 15 may be provided so that the battery cell 200 is fixed. The additional plate 15 may be coupled to support parts of the battery cell 200 that are not supported by the upper plate 12 and the lower plate 11, thereby stably fixing the battery cell 200. The additional plate 15 may be made of an acrylic material and may reduce the movement of the battery cell 200.

The battery cell tray 1 according to Embodiment 1 of the present disclosure includes the lower plate 11 and the upper plate 12, and the lower plate 11 and the upper plate 12 may be slidably coupled. Additionally, when the battery cell 200 is formed with a curvature, the accommodation portion 111 that accommodates the battery cell 200 includes the first surface 1111 having the same curvature. In the prior art, a battery cell tray optimized for the curved battery cell 200 was not manufactured, so when the curved battery cell 200 was accommodated in an existing battery cell tray and moved, the battery cell 200 was not completely fixed, resulting in damage to the battery cell 200 caused by the movement of the battery cell 200. In addition, there was a risk of fire when the charging or discharging process of the battery cell 200 progressed due to the movement state.

The battery cell tray 1 according to the present disclosure includes the first surface 1111 forming a curvature and the accommodation portion 111 formed in the shape of the battery cell 200, so that the battery cell 200 may be easily fixed by an operator, and damage to the battery cell 200 and fire may be prevented.

### Embodiment 2

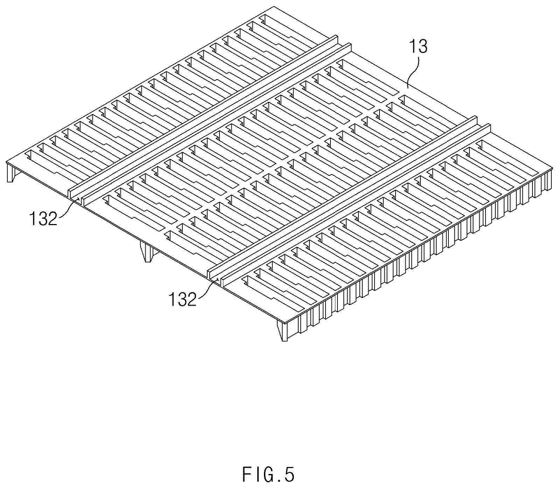

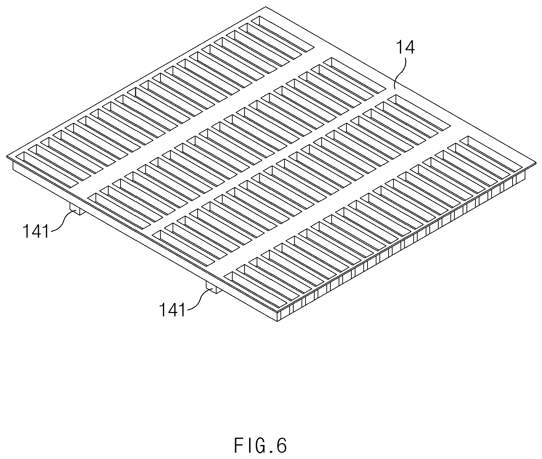

Hereinafter, Embodiment 2 of a battery cell tray 1 according to the present disclosure will be described in detail with reference to FIGS. 5 and 6.

FIG. 5 is a perspective view showing a lower tray of a battery cell tray according to Embodiment 2 of the present disclosure, and FIG. 6 is a perspective view showing an upper tray of a battery cell tray according to Embodiment 2 of the present disclosure.

In Embodiment 2 of the present disclosure, a lower plate 13 and an upper plate 14 have different structures from the lower plate 13 and the upper plate 14 in Embodiment 1. The common description in Embodiment 1 and Embodiment 2 will be omitted as much as possible, and Embodiment 2 will be described focusing on the differences between Embodiment 1 and Embodiment 2.

The upper plate 14 according to Embodiment 2 of the present disclosure may include a second protrusion 141 protruding from the lower surface thereof. The lower plate 13 may include a second groove 132 on the upper surface thereof. The second protrusion 141 may be coupled to the second groove 132. The second protrusion 141 of the upper plate 14 may be coupled to the second groove 132 to be sliding.

In the battery cell tray 1 according to Embodiment 2 of the present disclosure, as in Embodiment 1, the lower plate 13 may include a first surface 1311 forming the same curvature as the battery cell 200 and a second surface 1312 capable of supporting a portion of the other surface of the battery cell 200. The upper plate 14 may include a third surface 142 that forms the same curvature as the battery cell 200 and supports a portion of the battery cell 200.

The battery cell tray 1 according to Embodiment 2 of the present disclosure also has the same effect as the battery cell tray 1 according to Embodiment 1 described above. When the battery cell 200 is formed with a curvature, there is an effect of easily fixing and moving the battery cell 200 by including the accommodation portion 111 that forms the same curvature, and there is an effect of preventing damage and fire.

### Embodiment 3

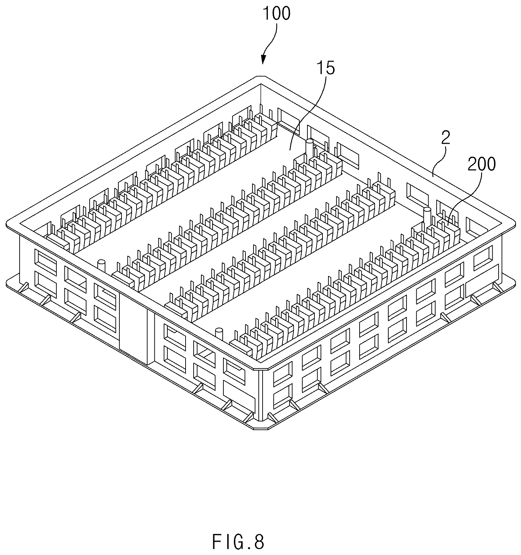

Hereinafter, a battery cell tray assembly 100 according to the present disclosure will be described in detail with reference to FIG. 8.

FIG. 8 is a perspective view showing a battery cell tray assembly according to the present disclosure.

The battery cell tray assembly 100 according to Embodiment 3 of the present disclosure may include a battery cell tray 1 and a tray frame 2.

The battery cell tray 1 may be accommodated in the tray frame 2. Since the battery cell tray 1 may be the battery cell tray 1 according to Embodiment 1 or Embodiment 2 of the present disclosure, the common description in Embodiment 1 and Embodiment 2 will be omitted as much as possible, and the description will focus on the differences.

As shown in FIG. 8, the plurality of battery cells 200 may be fixed by the lower plates 11, 13, the upper plates 12, 14, and the additional plate 15.

While the present disclosure has been hereinabove described with regard to a limited number of embodiments and drawings, the present disclosure is not limited thereto and may be embodied in different forms by those having ordinary skill in the technical field pertaining to the present disclosure within the technical aspect of the present disclosure and the scope of the appended claims and their equivalents.

### [List of Reference Numerals]

1: Battery cell tray
11, 13: Lower plate
111, 131: Accommodation portion
1111, 1311: First surface
1112, 1312: Second surface
112: First protrusion
132: Second groove
12, 14: Upper plate
121: First groove
141: Second protrusion
122, 142: Third surface
15: Additional plate
2: Tray frame
100: Battery cell tray assembly
200: Battery cell

## Claims

1. A battery cell tray, comprising:
a lower plate where an accommodation portion accommodating one end of the battery cell is formed; and
an upper plate formed to be penetrated by the battery cell,
wherein the lower plate and the upper plate are coupled to each other in a sliding movable way between a first state where an opening of the accommodation portion is opened; and a second state where an opening of the accommodation portion is at least partially closed.

2. The battery cell tray according to claim 1,
wherein the lower plate comprises a first protrusion protruding on an upper surface thereof, and
the upper plate comprises a first groove provided to be coupled to the first protrusion on a lower surface thereof.

3. The battery cell tray according to claim 1,
wherein the upper plate comprises a second protrusion protruding on a lower surface thereof, and
the lower plate comprises a second groove provided to be coupled to the second protrusion on an upper surface thereof.

4. The battery cell tray according to claim 1, further comprising:
an additional plate coupled to the upper surface of the upper plate and provided to fix the battery cell.

5. The battery cell tray according to claim 1,
wherein in the first state, the upper plate moves in a first direction with respect to the lower plate, and the opening of the accommodation portion is opened, so that the battery cell may be inserted into or separated from the accommodation portion.

6. The battery cell tray according to claim 5,
wherein in the second state, the upper plate moves in a second direction opposite to the first direction with respect to the lower plate, and the opening of the accommodation portion is at least partially closed, so that the battery cell may be accommodated in and fixed to the accommodation portion.

7. The battery cell tray according to claim 6,
wherein the battery cell is formed with a curvature, and
the upper plate comprises a third surface formed to have the same curvature as the battery cell to support the battery cell in the second state.

8. The battery cell tray according to claim 1,
wherein the accommodation portion comprises:
a first surface capable of supporting a portion of one surface of the battery cell; and
a second surface capable of supporting a portion of the other surface of the battery cell.

9. The battery cell tray according to claim 8,
wherein the battery cell is formed with a curvature, and
the first surface is formed to have the same curvature as the battery cell.

10. A battery cell tray assembly comprising:
a battery cell tray as stated in claim 1; and
a tray frame in which the battery cell tray is accommodated.
